# EUROPEAN PATENT SPECIFICATION

(11) **EP 1 867 141 B1**
(45) Date of publication and mention of the grant of the patent: **29.12.2010**
(21) Application number: 06740671.0
(22) Date of filing: 04.04.2006
(51) Int. Cl.: H04L 29/12, H04L 12/26

(54) **USING A TEST QUERY TO DETERMINE WHETHER A NETWORK DEVICE SUFFERS FROM A SOFTWARE BUG OR DESIGN FLAW**
VERWENDUNG EINER TESTABFRAGE ZUM ERMITTELN, OB BEI EINER NETZVORRICHTUNG EIN SOFTWARE- ODER KONSTRUKTIONSFEHLER VORLIEGT
UTILISATION D'UNE REQUETE DE TEST AFIN DE DETERMINER SI UN DISPOSITIF DE RESEAU SOUFFRE D'UN BOGUE DE LOGICIEL OU D'UN DEFAUT DE CONCEPTION

(30) Priority: 04.04.2005 US 98135
(43) Date of publication of application: 19.12.2007
(60) Divisional application: 10182471.2
(73) Proprietor: APPLE INC., Cupertino, CA 95014 (US)
(72) Inventor: GRAESSLEY, Joshua, V., Sunnyvale CA 94085 (US); CHESHIRE, Stuart, D., San Jose, CA 95126 (US)
(74) Representative: Wardle, Callum Tarn
(86) International application number: PCT/US2006/012933
(87) International publication number: WO 2006/108113

(56) References cited:
- US-A- 5 708 654
- US-A- 5 724 510
- STUART CHESHIRE APPLE COMPUTER BERNARD ABOBA MICROSOFT CORPORATION ERIK GUTTMAN SUN MICROSYSTEMS: "Dynamic Configuration of IPv4 Link-Local Addresses; draft-ietf-zeroconf-ipv4-linklocal-17.txt; " 8 July 2004 (2004-07-08), IETF STANDARD-WORKING-DRAFT, INTERNET ENGINEERING TASK FORCE, IETF, CH , XP015039152 ISSN: 0000-0004 paragraph [0001] - paragraph [0003]

## Description

### BACKGROUND

### Related Art

In order to participate in an Internet Protocol (IP) network, a network node, such as a computer or a printer, needs to be configured with an IP address. Additionally, in order: communicate with another device using IP over Ethernet or similar media, the network node needs the ability to translate an IP address for the device into the corresponding hardware (e.g. Ethernet) address for the device. The Address Resolution Protocol (ARP) solves this translation problem by providing an address-resolution mechanism which determines the hardware address for a given IP address, thereby enabling a network node to participate in an IP network.

IP addresses can be configured either manually by the user, or automatically with the help of another network node, such as a DHCP server. Unfortunately, a DHCP server may not always be available. Furthermore, it is cumbersome to have the user configure an IP address. Therefore, there is a strong need for a configuration mechanism by which a network node can automatically configure an IP address on its own.

IPv4 Link-local addressing (RFC 3927) provides such a configuration mechanism. In IPv4 link-local addressing, a configuration mechanism within a network node randomly picks a "candidate" IP address in a specified link-local address range and sends an ARP request to check whether the candidate link-local IP address is unique within the scope of the link. If the candidate link-local IP address is already in use by another network node, then the configuration mechanism picks another link-local IP address and checks whether that is unique. Once the configuration mechanism finds a unique link-local IP address, the network node uses it to communicate with other nodes in the network.

Unfortunately, some network routers are misconfigured to respond to all ARP requests, including ARP requests for any link-local IP address. If such a router is attached to a local network, it can interfere with the configuration mechanism by responding to ARP requests sent by the configuration mechanism, making it appear as if every single possible address is already in use. This can prevent the configuration mechanism from selecting an IP address.

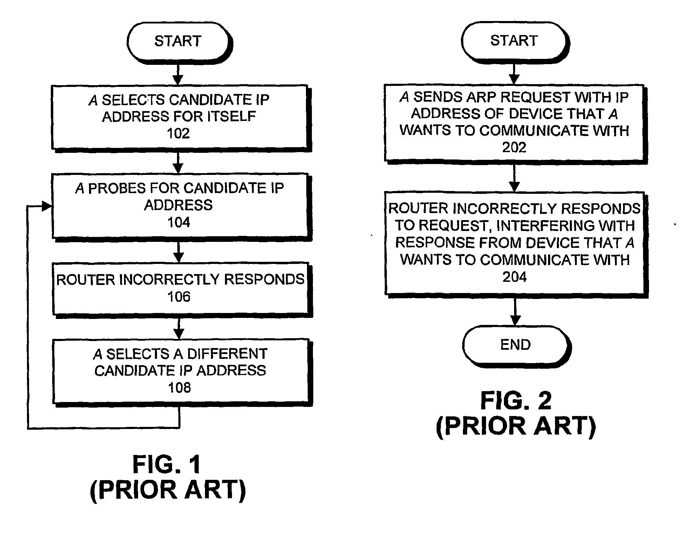

For example, FIG. 1 illustrates how a router can interfere with the process of assigning an IP address. During operation, node A selects a candidate IP address (step 102). Next, node A probes for the candidate IP address by performing an ARP request (step 104). The interfering router then responds to the ARP request (step 106). This causes node A to infer that another node already has the IP address, and to select a different candidate IP address (step 108). The system then returns to step 104 and the process repeats indefinitely. Consequently, node A is unable to assign an IP address.

Note that if such a router is configured to ignore ARP "probes," which are sent by a device that is attempting to assign a link-local IP address, the router can still interfere with normal (non-probe) ARP requests, which are sent to determine an Ethernet address associated with an IP address.

For example, FIG. 2 illustrates how a router can interfere with normal ARP requests. First, a node A sends an ARP request with the IP address of a device that node A wants to communicate with (step 202). Next, a router incorrectly responds to the ARP request, interfering with the response from the actual device that node A wants to communicate with (step 204). This causes node A to obtain the wrong Ethernet address. IP packets are subsequently sent to the router instead of to the desired device, where they are lost because the router either forwards them incorrectly, or simply discards them without forwarding at all.

Hence, what is needed is a method and an apparatus for handling the above-described problems encountered while performing ARP requests.

In a related problem, Internet Service Providers (ISPs) typically provide a single Internet Protocol (IP) address per Internet connection account, which would conventionally imply that only one Internet-enabled device per account can be coupled to the ISP's network at any given time. This is unfortunate, given that today many households have multiple computers and other Internet-enabled devices that the customer may desire to have connected to the ISP's network concurrently.

A common solution to this Internet connection-sharing problem is to use a Network Address Translation (NAT) device (commonly called a "home gateway") to share a single IP address with multiple Internet-enabled devices, which are coupled to the home gateway through a local area network (LAN). The home gateway device typically has at least two physical interfaces and two Internet addresses: a public one that is used to communicate with the ISP's network, and a private internal one that is used to communicate with devices on the LAN. From the point of view of an outside observer, all the customer's local computers and other Internet-enabled devices are made to appear as a single device with a single public IP address.

If the home gateway is configured to offer Dynamic Host Configuration Protocol (DHCP) service to the customer's devices, the home gateway usually assigns a private IP address to each Internet-enabled device coupled to the home gateway. The home gateway also provides its own LAN IP address to these Internet-enabled devices as both the default gateway to which they should send outbound IP packets, and the default DNS server to which they should send DNS queries. Since usually the home gateway is not, itself, authoritative for any DNS domains, all it does with received DNS queries is forward them on to a more knowledgeable DNS server elsewhere, typically one operated by the customer's ISP.

When communicating with services on the Internet, a client device sends IP packets via the home gateway. The home gateway rewrites the source IP address in each packet to be the common shared public IP address, and then forwards it through the ISP's network to the Internet. During this process, the home gateway typically keeps track of which packet was sent by which local Internet-enabled device, so that when response packet(s) return from the Internet via the ISP's network to the home gateway, the home gateway is able to route those response packets to the appropriate Internet-enabled device that originated the corresponding outgoing request packet.

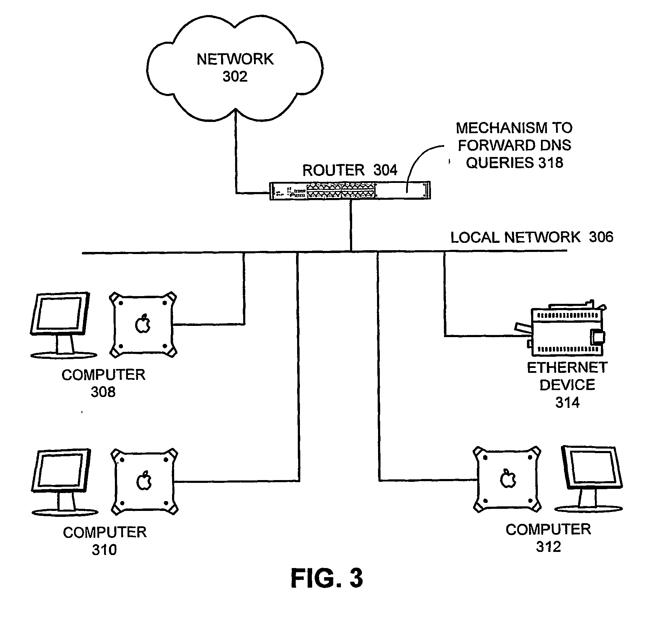

For example, FIG. 3 illustrates a home gateway 304, which is coupled both to network 302 and local network 306. Local network 306 couples home gateway 304 with computers 308, 310, and 312, and Ethernet device 314.

A home gateway (or any other Internet sharing device) such as home gateway 304, typically includes a mechanism for forwarding DNS queries to DNS servers which can provide answers to the DNS queries. This mechanism allows home gateway 304 to function as the default "configured DNS server" for all devices on local network 306.

Note that a "configured DNS server" can include any DNS-enabled device which can return a response to a DNS query, such as (1) an authoritative DNS server, (2) a recursive DNS server, and (3) a forwarding DNS server. An authoritative DNS server answers DNS queries directed to a domain or a set of domains that have been delegated to the authoritative DNS server. In doing so, the authoritative DNS server maintains DNS records for the delegated domain or set of domains, and is the only type of DNS server that can answer authoritatively for the delegated domain or set of domains.

A recursive DNS server (a DNS cache) receives DNS queries, and performs queries to lookup the requested domain. When an answer is received from an authoritative DNS server or from another recursive DNS server, the recursive DNS server caches the answer in its local DNS cache. If a query is made for a DNS record which was previously-cached in the local DNS cache, the recursive DNS server uses the cached information to answer the DNS query instead of performing another DNS query.

A forwarding DNS server (a DNS relay) forwards DNS queries to either a recursive DNS server or to an authoritative DNS server. As mentioned above, home gateways typically contain simple DNS relays, which function as the "configured DNS server" for local devices that communicate through the home gateway.

Although home gateways are typically able to enable multiple Internet-enabled devices to share a single Internet connection successfully, some of these home gateways have software bugs or similar design flaws. One such flaw causes the home gateway to incorrectly handle the forwarding of valid DNS queries to DNS servers. Furthermore, such flawed home gateways can crash and completely cease functioning when processing certain valid DNS queries, thereby disrupting their ability to perform their intended function, namely providing Internet access to local computers and similar Internet-enabled devices.

US 5,708,654 discloses a method using a LAN test instrument for detecting proxy ARP agents and misconfigured routers in a TCP/IP LAN. The method first allows for detection of routers running proxy ARP for the default route by issuing a single ARP command for a unique remote host. Because the target IP address chosen as a unique, non-existent device, the router will respond to the ARP request with a proxy ARP reply for its default route if this function is enabled. The method further allows for distinguishing between responses from actual devices having duplicate IP addresses and responses from misconfigured routers replying in proxy ARP for local hosts. The false duplicate IP addresses due to proxy ARP replies may be identified as phantom entries in a data base that can then be appropriately tagged or eliminated to display only the entries that correspond to actual physical devices to the user of the LAN test instrument.

Hence, what is needed is a method and an apparatus for a client on the local network to determine if its DNS server suffers from this particular known software bug so that the client can determine when it should avoid performing those certain valid DNS queries that are known to have a high likelihood of crashing that particular device.

### SUMMARY

One embodiment of the present invention provides a system that detects a non-compliant router that incorrectly responds to all address-resolution-protocol (ARP) requests, including ARP requests for link-local IP addresses. A router is permitted to respond to ARP requests for a single IPv4 Link-Local address that is has properly claimed for its own legitimate use (for example, under the protocol specified in Network Working Group RFC 2937), but it is not correct for it to answer indiscriminately ARP requests for every IPv4 Link-Local address.

According to a first aspect of the invention, there is provided a method as defined in claim 1.

In a variation on this embodiment, the ARP probe is sent by a requesting device that is in the process of assigning itself a candidate link-local IP address.

In a variation on this embodiment, if the ARP request with the reserved link-local IP address is not responded to, the requesting device assigns the candidate link-local IP address.

According to a second aspect of the invention, there is provided a computer-readable storage medium as defined in claim 4.

According to a third aspect of the invention, there is provided an apparatus as defined in claim 7.

### BRIEF DESCRIPTION OF THE FIGURES

FIG. 1 presents a flow chart illustrating how a router can interfere with the process of assigning an IP address.
FIG. 2 presents a flow chart illustrating how a router can interfere with a normal ARP request.
FIG. 3 illustrates a networked computer system in accordance with an embodiment of the present invention.
FIG. 4 presents a flow chart illustrating the process of assigning an IP address in accordance with an embodiment of the present invention.
FIG. 5 presents a flow chart illustrating the process of performing an ARP request in accordance with an embodiment of the present invention.
FIG. 6 presents a flow chart illustrating the process of determining if a DNS server suffers from a particular known software bug or similar design flaw in accordance with an embodiment of the present invention.

### DETAILED DESCRIPTION

The following description is presented to enable any person skilled in the art to make and use the invention, and is provided in the context of a particular application and its requirements.

The data structures and code described in this detailed description are typically stored on a computer-readable storage medium, which may be any device or medium that can store code and/or data for use by a computer system. This includes, but is not limited to, magnetic and optical storage devices, such as disk drives, magnetic tape, CDs (compact discs) and DVDs (digital versatile discs or digital video discs), and computer instruction signals embodied in a transmission medium (with or without a carrier wave upon which the signals are modulated). For example, the transmission medium may include a communications network, such as a LAN, a WAN, or the Internet.

### Networked Computer System

FIG. 3 illustrates a networked computer system 300 in accordance with an embodiment of the present invention. Networked computer system 300 includes a local network 306, which couples together computers 308, 310 and 312, a router 304 and an Ethernet device 314. Local network 306 can include any type of computer network, such as an Ethernet. Computers 308, 310 and 312 can include any type of network device which can perform an ARP request. Ethernet device 314 can include any type of device (such as a printer) that a node (such as computer 308) wants to communicate with.

Router 304 is a device that couples local network 306 to a network 302, such as the Internet. However, in this system, router 304 is a "non-compliant" router that can potentially interfere with ARP requests performed by a computer 308. For example, router 304 can interfere with ARP probes performed during the process assigning a link-local IP address, or with ARP requests performed to identify an Ethernet address associated with an IP address, such as an IP address for Ethernet device 314.

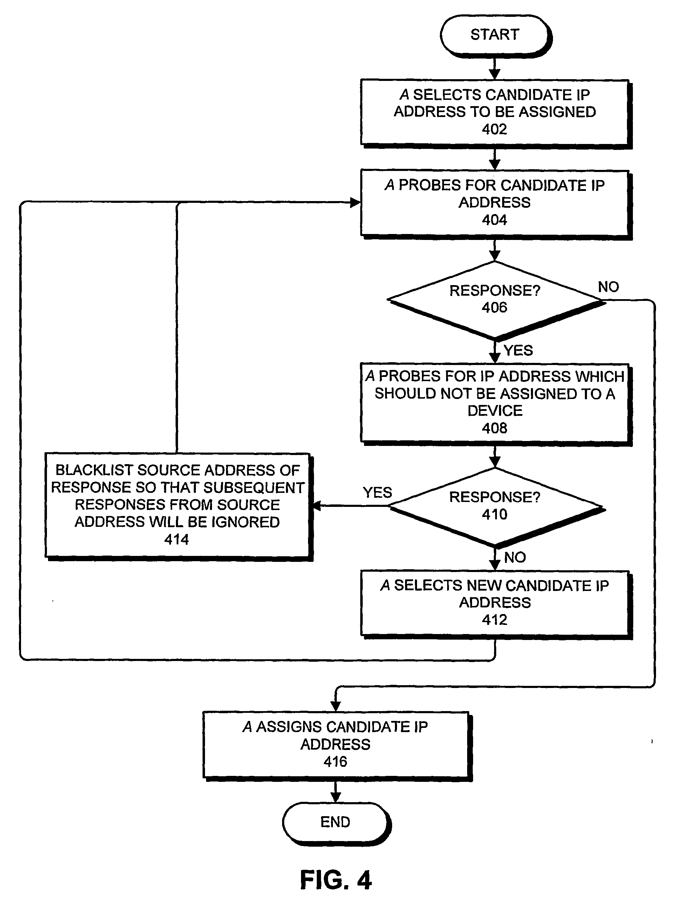

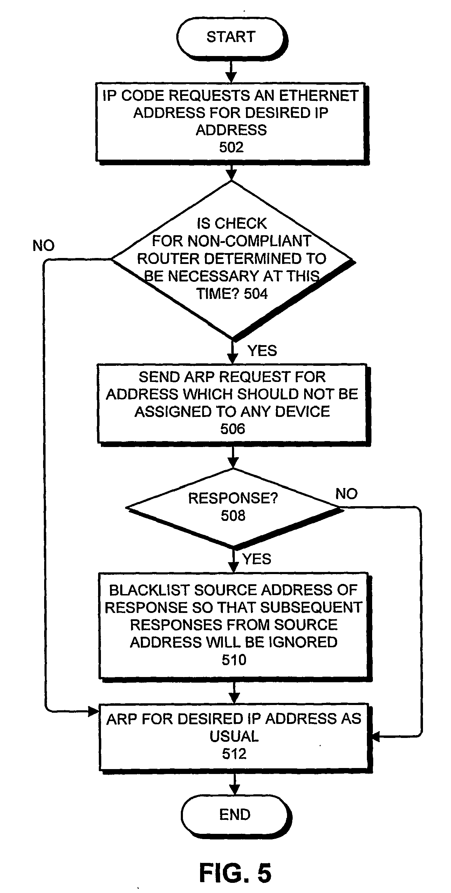

This interference can be handled as is described below with reference to FIGs. 4 and 5.

### Process of Assigning an IP Address

FIG. 4 presents a flow chart illustrating the process of assigning an IP address in accordance with an embodiment of the present invention. The process starts when a node A selects a candidate IP address to be assigned (step 402). Next, node A performs an initial ARP probe for the candidate IP address (step 404) and waits for a response (step 406).

If there is no response to the initial ARP probe, the candidate IP address is not assigned to any device. In this case, the system assigns the candidate IP address, typically to one of its interfaces (step 416). At this point, the process of assigning the IP address is complete.

If there is a response, the node A performs a second ARP probe for a reserved link-local IP address; which should not be assigned to any device, such as the broadcast address 169.254.255.255 and/or 169.254.0.0 (step 408). If there is no response to this second ARP probe, the system infers that no router is responding to ARP requests for link-local IP addresses. Hence, the response to the initial ARP probe validly indicates that the candidate IP address is already assigned to another device. In this case, the system selects a new candidate IP address (step 412) and returns to step 404 to probe for the new candidate IP address.

On the other hand, if there was a response to the second ARP probe in step 410, the system infers that a router is incorrectly responding to link-local IP addresses. In this case, the system blacklists the source address of the response so that subsequent responses from the source address will be ignored (step 416). The system then returns to step 404 to probe for the candidate address again.

Note that an ARP probe (which is used to test a candidate IP address) can be differentiated for a normal ARP request because the source address of an ARP probe is all zeros. Hence, it is possible that a router might be correctly configured to not respond to ARP probes, yet still incorrectly respond to normal ARP requests. In this case, the router will not interfere with ARP probes during the process of assigning IP addresses, but may instead interfere with normal ARP requests, in which a node seeks to determine an Ethernet address associated with a valid link-local IP address. This problem can be handled by the process described below with reference to FIG. 5.

### Process of Performing an ARP Request

FIG. 5 presents a flow chart illustrating the process of performing an ARP request in accordance with an embodiment of the present invention. The process starts when IP code in a node A requests an Ethernet address for a desired IP address (step 502). Next, the system determines if (a) this will be the first link-local ARP on this interface to the network since the interface was enabled, or (b) it has been more than some time period since the system last checked for a non-compliant router on this link (step 504). If not, the system ARPs for the address as usual to determine the Ethernet address for the desired IP address (step 512).

On the other hand, if at step 504 the system determines that this will be the first link-local ARP on the interface, or that it is time to re-check this interface, the system first tests to see if there is a router indiscriminately responding to ARP requests on the network associated with the interface. This involves sending an initial ARP request on the network, for an address which should not be assigned to any node (as is described above) (step 506). The system then waits for a response (step 508). If there is no response, the system infers that no router is indiscriminately responding to the link-local ARP requests on the network. In this case, the system ARPs for the desired IP address as usual (step 512).

On the other hand, if there is a response to the ARP request, the system infers that a router is indiscriminately responding to link-local IP addresses. In this case, the system blacklists the source address of the response so that subsequent responses from that source address will be ignored (step 510) when they pertain to link-local IP addresses. The system then proceeds to step 512 and ARPs for the desired IP address as usual.

### Flawed DNS Server

Some DNS servers that reside within home gateways are flawed and can produce incorrect answers or can cause the home gateway to crash. (Note that a DNS server can include any DNS-enabled device including a DNS server, a DNS relay, or a DNS cache.) Such flawed DNS servers assume that if a client performs a PTR-type DNS query, the only possible request the client is making is to perform an IPv4 "reverse lookup" DNS query, translating from an IP address to a name.

An example of a properly-formed IPv4 "reverse-lookup" domain name query is "2.1.168.192.in-addr.arpa." This query and ones like it may be performed by software, or by the user with a DNS utility such as "nslookup". The nslookup command and arguments for this example are:
"nslookup -q=ptr 2.1.168.192.in-addr.arpa." In this example, the DNS query type is PTR and the DNS query is "2.1.168.192.in-addr.arpa." Note that a PTR query is frequently a "reverse-lookup" DNS query, which performs a mapping from an IP address to a corresponding domain name. However, other properly-formed DNS queries are possible even though they may not make any sense. For example, the PTR-type DNS query "2.1.168.192.nonsense" is a properly-formed DNS query, but does not yield any answer records since the top-level domain "nonsense" does not actually exist. Note that the domain "in-addr.arpa" is the proper domain suffix to use when performing a "reverse lookup" DNS query.

Some flawed home gateways examine only the first four labels of the PTR-type DNS query ("labels" in a domain name are the groups of characters separated by periods) and ignore the remainder of the name. In the "2.1.168.192.nonsense." example, the first four labels are "2.1.168.192." Therefore, for these flawed home gateways, the PTR-type DNS query "2.1.168.192.nonsense" is indistinguishable from the PTR-type DNS query "2.1.168.192.in-addr.arpa."

Also note that these same flawed home gateways assume that the first four labels are decimal numbers between 0 and 255. If the first four labels of the PTR-type DNS query are not numbers between 0 and 255, these flawed home gateways crash.

### Detecting a Flawed Internet Router

One embodiment of the present invention detects such flawed home gateways by performing a special DNS query that is constructed to detect the existence of a flaw in the DNS server without crashing it.

For example, the special query which detects a flaw in the home gateway's DNS server is the PTR-type DNS query "2.1.168.192.nonsense.", which produces a NXDOMAIN answer (i.e. domain does not exist) in a properly functioning home gateway without the flaw. However, in home gateways with flawed DNS servers, they will attempt to give a host name in response to the 2.1.168.192.nonsense query, even though the query was not in fact an "in-addr.arpa" name lookup query.

Unfortunately, the PTR-type DNS query "2.1.168.192.nonsense", when directed to a DNS server without the above-mentioned flaw, causes a DNS query to be sent to one of the DNS root name servers. Since in general the only way for a DNS server or relay to know whether or not a particular top-level domain exists is to ask one of the root name servers, every such test query potentially results in a nuisance query being sent to the root name servers.

In one embodiment of the present invention, the special query is constructed so that the DNS server does not communicate with a DNS root name server whether or not the flaw exists.

For example, the special query can be "1.0.0.127.dnsbugtest.1.0.0.127.in-addr.arpa." In this exemplary query, the address "127.0.0.1" is the "loopback address." The loopback address is a special IP address available for use when two pieces of network software on the same machine want to communicate with each other using IP networking mechanisms and programming interfaces, independent of whether conventional (inter-machine) IP networking is available.

Also note that every DNS server is supposed to contain a fixed DNS record which maps "1.0.0.127.in-addr.arpa." to the name "localhost". Hence, any names that are sub-domains of the name "1.0.0.127.in-addr.arpa." are properly-formed and valid, but are names that are known to have no associated DNS records. In other words, "1.0.0.127.dnsbugtest.1.0.0.127.in-addr.arpa." is a legal name, but any queries for that name should yield no results. Therefore, a home gateway with a properly functioning DNS server returns an NXDOMAIN answer (i.e. domain name does not exist) without having to communicate with a DNS root name server to make that determination.

Note that since the last six labels in this PTR-type DNS query is "1.0.0.127.in-addr.arpa.", a home gateway with a properly functioning DNS server will not forward the DNS query to the DNS root name server since the home gateway's DNS server knows that the IP address is a sub-domain of the loopback address. Since sub-domains of the loopback address are not used, the DNS server should respond with an NXDOMAIN answer without communicating with a DNS root name server.

Similarly, a home gateway with the flaw that the special query is constructed to detect does not communicate with a DNS root name server. Recall that a home gateway with a flawed DNS server only uses the first four labels of the PTR-type DNS query, and interprets this PTR-type DNS query as the PTR-type DNS query "1.0.0.127.in-addr.arpa." Since the flawed home gateway's DNS server knows that the correct answer for a PTR-type DNS query for "1.0.0.127.in-addr.arpa." should be "localhost," the home gateway returns the answer "localhost" without communicating with any DNS root name server.

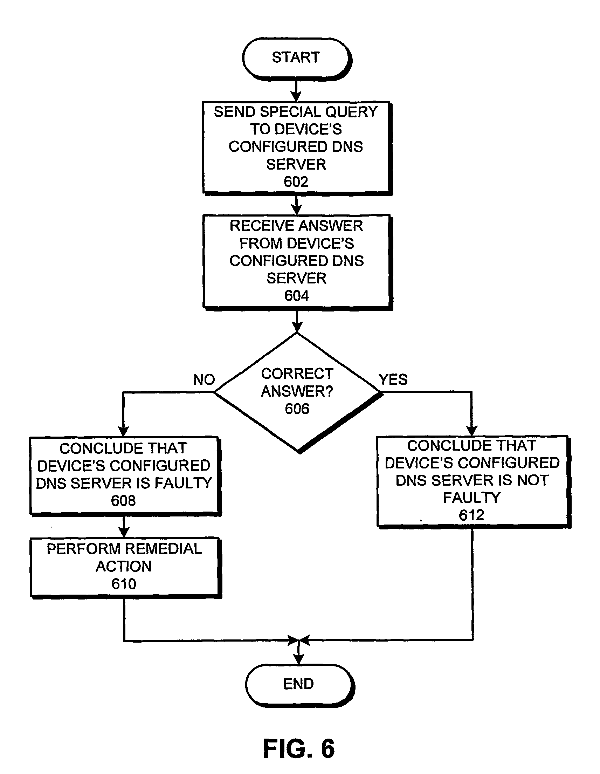

FIG. 6 presents a flow chart illustrating the process of determining if a DNS server is flawed in accordance with an embodiment of the present invention. The process begins when the system sends a special query to the DNS server (step 602). In one embodiment of the present invention, the special query is the PTR-type DNS query "1.0.0.127.dnsbugtest.1.0.0.127.in-addr.arpa."

Next the system receives an answer from the DNS server (step 604). If the answer is the correct response (step 606 - YES), the system concludes that the DNS server is not flawed (step 612). In one embodiment of the present invention, the correct response is an NXDOMAIN error code, which indicates that a domain name does not exist.

If the answer is incorrect (step 606 - NO), the system concludes that the DNS server is flawed (step 608) and performs a remedial action (step 610).

In one embodiment of the present invention, the remedial action involves taking steps to avoid performing those certain valid DNS queries that are believed to have a high likelihood of crashing that particular device.

In one embodiment of the present invention, the valid DNS queries to be avoided are those used by Wide-Area Bonjour, a networking technology that allows clients to discover network services on a wide-area network.

The foregoing descriptions of embodiments of the present invention have been presented only for purposes of illustration and description. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

## Claims

1. A method for detecting a device (304) that incorrectly responds to address-resolution-protocol, ARP, requests, such as a device (304) that incorrectly responds to ARP requests for link-local IP addresses that it has not properly claimed for its own legitimate use, comprising:
selecting (402) a candidate link-local IP address;
sending (404) a first ARP probe for the candidate link-local IP address;
only if a response is received to the first ARP probe, sending (408) a second ARP probe to the responding device (304) asking for an Ethernet address associated with a reserved IP address, wherein the reserved IP address is an IPv4 Link-Local broadcast address 169.254.255.255 or an IPv4 Link-Local address 169.254.0.0, which should not be assigned to any device;
if a response is received from the device (304) to the second ARP probe, placing (414) the address of the device (304) on a black list associated with a range of link-local IP addresses, and
ignoring subsequent ARP responses from source addresses in the black list for the link-local address range, so that subsequent ARP responses pertaining to that address range from the device (304) will be ignored.

2. The method of claim 1, wherein the first ARP probe is sent by a requesting device (308) that is in the process of assigning a candidate link-local IP address.

3. The method of claim 2, wherein if no response is received to the first ARP probe, the requesting device (308) assigns (416) the candidate link-local IP address.

4. A computer-readable storage medium storing instructions that when executed by a computer cause the computer to perform a method for detecting a device (304) that incorrectly responds to address-resolution-protocol, ARP, requests, such as a device (304) that incorrectly responds to ARP requests for link-local IP addresses that it has not properly claimed for its own legitimate use, the method comprising:
selecting (402) a candidate link-local IP address;
sending (404) a first ARP probe for the candidate link-local IP address;
only if a response is received to the first ARP probe, sending (408) a second ARP probe to the responding device (304) asking for an Ethernet address associated with a reserved IP address, wherein the reserved IP address is an IPv4 Link-Local broadcast address 169.254.255.255 or an IPv4 Link-Local address 169.254.0.0, which should not be assigned to any device;
if a response is received from the device (304) to the second ARP probe, placing (414) the address of the device (304) on a black list associated with a range of link-local IP addresses, and
ignoring subsequent ARP responses from source addresses in the black list for the link-local address range, so that subsequent ARP responses pertaining to that address range from the device (304) will be ignored.

5. The computer-readable storage medium of claim 4, wherein the first ARP probe is sent by a requesting device (308) that is in the process of assigning a candidate link-local IP address.

6. The computer-readable storage medium of claim 5, wherein if no response is received to the first ARP probe, the requesting device (308) assigns (416) the candidate link-local IP address.

7. An apparatus that detects a device (304) that incorrectly responds to address-resolution-protocol, ARP, requests, such as a device (304) that incorrectly responds to ARP requests for link-local IP addresses that it has not properly claimed for its own legitimate use, comprising:
a sending mechanism configured to select a candidate link-local IP address and to send a first ARP probe for the candidate link-local IP address;
wherein, when a response is received to the first ARP probe, the sending mechanism is configured to send a second ARP probe asking for an Ethernet address associated with a reserved IP address, wherein the reserved IP address is an IPv4 Link-Local broadcast address 169.254.255.255 or an IPv4 Link-Local address 169.254.0.0, which should not be assigned to any device; and
a black-listing mechanism, wherein if a response is received from the device (304) to the second ARP probe, the black-listing mechanism is configured to:
place the address of the device (304) on a black list associated with a range of link-local IP addresses, and
ignore subsequent ARP responses from source addresses in the black list for the link-local address range, so that subsequent ARP responses pertaining to that address range from the device (304) will be ignored.

8. The apparatus of claim 7, wherein the first ARP probe is sent by a requesting device (308) that is in the process of assigning a candidate link-local IP address.

9. The apparatus of claim 8, further comprising an assigning mechanism, wherein if no response is received to the first ARP probe, the assigning mechanism is configured to assign the candidate link-local IP address.

## Patentansprüche

1. Verfahren zum Erfassen einer Vorrichtung (304), die nicht korrekt auf adress-resolution-protocol, ARP, Anfragen antwortet, wie eine Vorrichtung, die nicht korrekt auf ARP Anfragen für Link-Local IP Adressen reagiert, die sie nicht korrekt für ihre eigene berechtigte Verwendung beansprucht hat, wobei das Verfahren umfasst:
Auswählen (402) einer Link-Local IP Kandidatenadresse;
Senden (404) eines ersten ARP Tests für die Link-Local IP Kandidatenadresse;
nur, wenn eine Antwort auf den ersten ARP Test empfangen wird, senden (408) eines zweiten ARP Tests an die antwortende Vorrichtung (304), der nach einer Ethernetadresse fragt, die mit einer reservierten IP Adresse assoziiert ist, wobei die reservierte IP Adresse eine IPv₄ Link-Local Rundruf Adresse 169.254.255.255 oder eine IPv₄ Link-Local Adresse 169.254.0.0 ist, welche keiner Vorrichtung zugewiesen sein sollte;
wenn eine Antwort von der Vorrichtung (304) auf den zweiten ARP Test empfangen wird, setzen (414) der Adresse der Vorrichtung (304) auf eine schwarze Liste, die mit einem Bereich an Link-Local IP Adressen assoziiert ist, und
Ignorieren von nachfolgenden ARP Antworten von Quelladressen in der schwarzen Liste für den Link-Local Adressbereich, so dass nachfolgende ARP Antworten von der Vorrichtung (304), die sich auf den Adressbereich beziehen, ignoriert werden.

2. Verfahren nach Anspruch 1, wobei der erste ARP Test durch eine anfragende Vorrichtung (308) gesendet wird, die im Begriff ist eine Link-Local Kandidatenadresse zuzuweisen.

3. Verfahren nach Anspruch 2, wobei, wenn keine Antwort auf den ersten ARP Test empfangen wird, die anfragende Vorrichtung (308) die Link-Local Kandidatenadresse zuweist (416).

4. Computerlesbares Speichermedium, das Anweisungen speichert, die, wenn sie durch einen Computer ausgeführt werden, den Computer dazu veranlassen, ein Verfahren zum Erfassen einer Vorrichtung (304) auszuführen, die nicht korrekt auf adress-resolution-protocol, ARP, Anfragen antwortet, wie eine Vorrichtung (304), die nicht korrekt auf ARP Anfragen für Link-Local IP Adressen antwortet, die sie nicht richtig für ihre eigene berechtigte Verwendung beansprucht hat, wobei das Verfahren umfasst:
Auswählen (402) einer Link-Local IP Kandidatenadresse;
Senden (404) eines ersten ARP Tests für die Link-Local IP Kandidatenadresse;
nur, wenn eine Antwort auf den ersten ARP Test empfangen wird, senden (408) eines zweiten ARP Tests an die antwortende Vorrichtung (304), der nach einer Ethernetadresse fragt, die mit einer reservierten IP Adresse assoziiert ist, wobei die reservierte IP Adresse eine IPv₄ Link-Local Rundruf Adresse 169.254.255.255 oder eine IPv₄ Link-Local Adresse 169.254.0.0 ist, welche keiner Vorrichtung zugewiesen sein sollte;
wenn eine Antwort von der Vorrichtung (304) auf den zweiten ARP Test empfangen wird, setzen (414) der Adresse der Vorrichtung (304) auf eine schwarze Liste, die mit einem Bereich an Link-Local IP Adressen assoziiert ist, und
Ignorieren von nachfolgenden ARP Antworten von Quelladressen in der schwarzen Liste für den Link-Local Adressbereich, so dass nachfolgende ARP Antworten von der Vorrichtung (304), die sich auf den Adressbereich beziehen, ignoriert werden.

5. Computerlesbares Speichermedium nach Anspruch 4, wobei der erste ARP Test durch eine anfragende Vorrichtung (308) gesendet wird, die im Begriff ist, eine Link-Local Kandidatenadresse zuzuweisen.

6. Computerlesbares Speichermedium nach Anspruch 5, wobei, wenn keine Antwort auf den ersten ARP Test empfangen wird, die anfragende Vorrichtung (308) die Link-Local Kandidatenadresse zuweist (416).

7. Vorrichtung, die eine Vorrichtung (304) erfasst, die nicht korrekt auf adress-resolution-protocol ARP Anfragen antwortet, wie eine Vorrichtung (304), die nicht korrekt auf ARP Anfragen für Link-Local IP Adressen antwortet, die sie nicht richtig für ihre eigne berechtigte Verwendung beansprucht hat, umfassend:
einen Sendemechanismus, der dazu konfiguriert ist, eine Link-Local IP Kandidatenadresse auszuwählen und einen ersten ARP Test für die Link-Local IP Kandidatenadresse zu senden;
wobei, wenn eine Antwort auf den ersten ARP Test empfangen wird, der Sendemechanismus dazu konfiguriert ist, einen zweiten ARP Test zu senden, der nach einer Ethernetadresse fragt, die mit einer reservierten IP Adresse assoziiert ist, wobei die reservierte IP Adresse eine IPv₄ Link-Local Rundrufadresse 169.254.255.255 oder eine IPv₄ Link-Local Adresse 169.254.0.0 ist, welche keiner Vorrichtung zugewiesen sein sollte; und
einen Auf-die-schwarze-Liste-setzen Mechanismus, wobei, wenn eine Antwort von der Vorrichtung (304) auf den zweiten ARP Test empfangen wird, der Auf-die-schwarze-Liste-setzen Mechanismus dazu konfiguriert ist:
die Adresse der Vorrichtung (304) auf eine schwarze Liste zu setzen, die mit einem Bereich an Link-Local IP Adressen assoziiert ist, und
nachfolgende ARP Antworten von Quelladressen in der schwarzen Liste für den Link-Local Adressbereich zu ignorieren, so dass nachfolgende ARP Antworten von der Vorrichtung (304), die sich auf den Adressbereich beziehen, ignoriert werden.

8. Vorrichtung nach Anspruch 7, wobei der erste ARP Test durch eine anfragende Vorrichtung (308) gesendet wird, die im Begriff ist eine Link-Local Kandidatenadresse zuzuweisen.

9. Vorrichtung nach Anspruch 8, weiter einen Zuweisungs-Mechanismus umfassend, wobei, wenn keine Antwort auf den ersten ARP Test empfangen wird, der Zuweisungs-Mechanismus dazu konfiguriert ist, die Link-Local IP Kandidatenadresse zuzuweisen.

## Revendications

1. Un procédé pour détecter un dispositif (304) qui répond de façon incorrecte à des requêtes de protocole de résolution d'adresse, ARP, tel qu'un dispositif (304) qui répond de façon incorrecte à des requêtes ARP pour des adresses IP lien-local qu'il n'a pas correctement revendiquées pour son propre usage légitime, comprenant :
la sélection (402) d'une adresse IP lien-local candidate (402) ;
l'envoi (404) d'une première sonde ARP pour l'adresse IP lien-local candidate ;
seulement si une réponse est reçue à la première sonde ARP, l'envoi (408) d'une seconde sonde ARP au dispositif répondant (304) en demandant une adresse Ethernet associée à une adresse IP réservée, où l'adresse IP réservée est une adresse IPv4 broadcast lien-local 169.254.255.255 ou une adresse IPv4 lien-local 169.254.0.0 qui ne doit être attribuée à aucun dispositif ;
si une réponse à la seconde sonde ARP est reçue du dispositif (304), le placement (414) de l'adresse du dispositif (304) sur une liste noire associée à une plage d'adresses IP lien-local, et
l'ignorance des réponses ARP subséquentes provenant d'adresses source dans la liste noire pour la plage d'adresses lien-local, de sorte que les réponses ARP subséquentes relatives à cette plage d'adresses en provenance du dispositif (304) seront ignorées.

2. Le procédé de la revendication 1, dans lequel la première sonde ARP est envoyée par un dispositif requérant (308) qui est en processus d'attribution d'une adresse IP lien-local candidate.

3. Le procédé de la revendication 2, dans lequel si aucune réponse n'est reçue à la première sonde ARP, le dispositif requérant (308) attribue (416) l'adresse IP lien-local candidate.

4. Un support de stockage lisible par ordinateur stockant des instructions qui lorsqu'elles sont exécutées par un ordinateur font en sorte que l'ordinateur exécute un procédé pour détecter un dispositif (304) qui répond de façon incorrecte à des requêtes de protocole de résolution d'adresse, ARP, tel qu'un dispositif (304) qui répond de façon incorrecte à des requêtes ARP pour des adresses IP lien-local qu'il n'a pas correctement revendiquées pour son propre usage légitime, ce procédé comprenant :
la sélection (402) d'une adresse IP lien-local candidate (402) ;
l'envoi (404) d'une première sonde ARP pour l'adresse IP lien-local candidate ;
seulement si une réponse est reçue à la première sonde ARP, l'envoi (408) d'une seconde sonde ARP au dispositif répondant (304) en demandant une adresse Ethernet associée à une adresse IP réservée, où l'adresse IP réservée est une adresse IPv4 broadcast lien-local 169.254.255.255 ou une adresse IPv4 lien-local 169.254.0.0 qui ne doit être attribuée à aucun dispositif ;
si une réponse à la seconde sonde ARP est reçue du dispositif (304), le placement (414) de l'adresse du dispositif (304) sur une liste noire associée à une plage d'adresses IP lien-local, et
l'ignorance des réponses ARP subséquentes provenant d'adresses source dans la liste noire pour la plage d'adresses lien-local, de sorte que les réponses ARP subséquentes relatives à cette plage d'adresses en provenance du dispositif (304) seront ignorées.

5. Le support de stockage lisible par ordinateur de la revendication 4, dans lequel la première sonde ARP est envoyée par un dispositif requérant (308) qui est en processus d'attribution d'une adresse IP lien-local candidate.

6. Le support de stockage lisible par ordinateur de la revendication 5, dans lequel si aucune réponse n'est reçue à la première sonde ARP, le dispositif requérant (308) attribue (416) l'adresse IP lien-local candidate.

7. Appareil qui détecte un dispositif (304) qui répond de façon incorrecte à des requêtes de protocole de résolution d'adresse, ARP, tel qu'un dispositif (304) qui répond de façon incorrecte à des requêtes ARP pour des adresses IP lien-local qu'il n'a pas correctement revendiquées pour son propre usage légitime, comprenant :
un mécanisme d'envoi configuré pour sélectionner une adresse IP lien-local candidate et pour envoyer une première sonde ARP pour l'adresse IP lien-local candidate ;
dans lequel, lorsqu'une réponse est reçue à la première sonde ARP, le mécanisme d'envoi est configuré pour envoyer une seconde sonde ARP demandant une adresse Ethernet associée à une adresse IP réservée, où l'adresse IP réservée est une adresse IPv4 broadcast lien-local 169.254.255.255 ou une adresse IPv4 lien-local 169.254.0.0 qui ne doit être attribuée à aucun dispositif ; et
un mécanisme de mise en liste noire, dans lequel si une réponse est reçue du dispositif (304) à la seconde sonde ARP, le mécanisme de mise en liste noire est configuré pour :
placer l'adresse du dispositif (304) sur une liste noire associée à une plage d'adresses IP lien-local, et
ignorer les réponses ARP subséquentes provenant d'adresses source dans la liste noire pour la plage d'adresses lien-local, de sorte que les réponses ARP subséquentes relatives à cette plage d'adresses en provenance du dispositif (304) seront ignorées.

8. Le dispositif de la revendication 7, dans lequel la première sonde ARP est envoyée par le dispositif requérant (308) qui est en processus d'attribution d'une adresse IP lien-local candidate.

9. Le dispositif de la revendication 8, comprenant en outre un mécanisme d'attribution, dans lequel si aucune réponse n'est reçue à la première sonde ARP, le mécanisme d'attribution est configuré pour attribuer l'adresse IP lien-local candidate.
